# EUROPÄISCHE PATENTSCHRIFT

(11) **EP 1 848 603 B1**
(45) Veröffentlichungstag und Bekanntmachung des Hinweises auf die Patenterteilung: **17.04.2013**
(21) Anmeldenummer: 06703884.4
(22) Anmeldetag: 27.01.2006
(51) Int. Cl.: B60J 7/00, B60J 7/08, B60J 7/10, B60J 7/12, B60J 7/14

(54) **HARDTOP-VERDECK**
HARD TOP
TOIT RIGIDE

(30) Priorität: 19.02.2005 DE 102005007728
(43) Veröffentlichungstag der Anmeldung: 31.10.2007
(73) Patentinhaber: Daimler AG, 70327 Stuttgart (DE)
(72) Erfinder: KOCH, M, 71032 Böblingen (DE)
(74) Vertreter: JENSEN & SON
(86) Internationale Anmeldenummer: PCT/EP2006/000707
(87) Internationale Veröffentlichungsnummer: WO 2006/087082

(56) Entgegenhaltungen:
- DE-C1- 19 960 010
- FR-A- 2 854 352
- US-A- 5 769 483
- US-A- 5 785 375

## Beschreibung

Die Erfindung betrifft ein Hardtop-Verdeck für ein Cabriolet-Fahrzeug mit wenigstens zwei zwischen einer geschlossenen Stellung und einer abgelegten Stellung verstellbaren Dachteilen nach der im Oberbegriff von Anspruch 1 näher definierten Art. Des Weiteren betrifft die Erfindung ein Cabriolet-Fahrzeug.

Aus der DE 199 60 010 C2 ist ein gattungsgemäßes Hardtop-Verdeck sowie ein entsprechendes Cabriolet-Fahrzeug bekannt. Das Verdeck kann aus seiner im Kofferraum des Cabriolet-Fahrzeugs abgelegten Stellung in eine sogenannte Beladestellung gebracht werden, wodurch es möglich ist, den Kofferraum bequem zu beladen und anschließend die Dachteile wieder in ihre abgelegte Stellung zu bringen.

Nachteilig bei dieser bekannten Lösung ist jedoch, dass für das Einnehmen der Beladestellung aufgrund der erforderlichen Umlenkung des Verdecks eine zusätzliche Betätigungs- bzw. Antriebseinrichtung, in diesem Fall ein zweiter Hydraulikzylinder, erforderlich ist, der nicht nur zusätzliche Herstellungs- und Montagekosten verursacht, sondern als zusätzliches Bauteil auch ein erhöhtes Ausfallrisiko darstellt.

Es ist daher Aufgabe der vorliegenden Erfindung, ein Hardtop-Verdeck für ein Cabriolet-Fahrzeug zu schaffen, bei welchem mit einem möglichst geringen Aufwand eine Beladestellung für die Dachteile eingenommen werden kann.

Erfindungsgemäß wird diese Aufgabe durch die in Anspruch 1 genannten Merkmale gelöst.

Der erfindungsgemäß zwischen dem Hauptlager und dem Zwischenlager angeordnete Steuerhebel sorgt bei der Bewegung des Verdecks zwischen der Geschlossenstellung und der Beladestellung dafür, dass sich das Zwischenlager nicht gegenüber dem Hauptlager bewegen kann. Auf diese Weise vollzieht sich bei der Ablegebewegung des Verdecks lediglich das übliche Zusammenfalten der beiden Dachteile, bis diese ihre kompakte, zusammengelegte Stellung erreichen.

Die Steuerkontur ist derart ausgebildet, dass sich das Zwischenlager mit dem Erreichen der Beladestellung gegenüber dem Hauptlager bewegen kann, so dass das gesamte, in der vorhergehenden Ablegebewegung gefaltete, über das Verdeckgestänge an dem Zwischenlager angebrachte Verdeck abgesenkt und somit aus der Beladestellung in seine abgelegte Stellung gebracht werden kann. Für das Bewegen des Verdecks von der abgelegten Stellung in die Beladestellung findet lediglich eine Bewegungsumkehr statt.

Auf diese Weise kann mittels lediglich einer, sich vorzugsweise auf beiden Seiten des Verdecks jeweils ein Antriebselement aufweisenden Antriebseinrichtung ein Einnehmen der Beladestellung ermöglicht werden, was einen einfacheren Zugang zu dem Kofferraum, in dem sich das Hardtop-Verdeck in seinem abgelegten Zustand vorzugsweise befindet, erlaubt. Dadurch ist es möglich, eine bislang erforderliche, zweite Antriebseinrichtung für jede Seite des Hardtop-Verdecks einzusparen, was auch den Verzicht auf Endschalter und entsprechende Verkabelungen ermöglicht. Dies führt zu einer Verringerung des Steuerungsaufwandes beim Bewegen des erfindungsgemäßen Hardtop-Verdecks.

Eine konstruktiv sehr einfache Ausführungsform der Steuerkontur kann darin bestehen, dass die Steuerkontur einen Rücksprung aufweist, der ein Absenken des Zwischenlagers gegenüber dem Hauptlager ermöglicht.

Des Weiteren kann vorgesehen sein, dass die Steuerkontur dem Hauptlager zugeordnet ist. Obwohl auch eine Anbringung der Steuerkontur an dem Zwischenlager möglich ist, hat sich die Zuordnung derselben zu dem Hauptlager als eine sowohl konstruktiv als auch bezüglich ihrer Funktion besonders vorteilhafte Ausführungsform erwiesen.

Ein Cabriolet-Fahrzeug mit einem erfindungsgemäßen Hardtop-Verdeck ist in Anspruch 10 angegeben.

Weitere vorteilhafte Ausgestaltungen und Weiterbildungen der Erfindung ergeben sich aus den restlichen Unteransprüchen. Nachfolgend ist ein Ausführungsbeispiel der Erfindung anhand der Zeichnung prinzipmäßig dargestellt.

Dabei zeigen:
- Fig. 1: das erfindungsgemäße Hardtop-Verdeck in seiner geschlossenen Stellung;
- Fig. 2: das Hardtop-Verdeck aus Fig. 1 in seiner Beladestellung;
- Fig. 3: das Hardtop-Verdeck aus Fig. 1 in seiner abgelegten Stellung;
- Fig. 4: eine Ansicht gemäß dem Pfeil IV aus Fig. 1;
- Fig. 5: eine erste Ausführungsform einer Antriebseinrichtung für das Hardtop-Verdeck in der Stellung gemäß Fig. 1;
- Fig. 6: eine zweite Ausführungsform einer Antriebseinrichtung für das Hardtop-Verdeck in der Stellung gemäß Fig. 1; und
- Fig. 7: eine dritte Ausführungsform einer Antriebseinrichtung für das Hardtop-Verdeck in der Stellung gemäß Fig. 1.

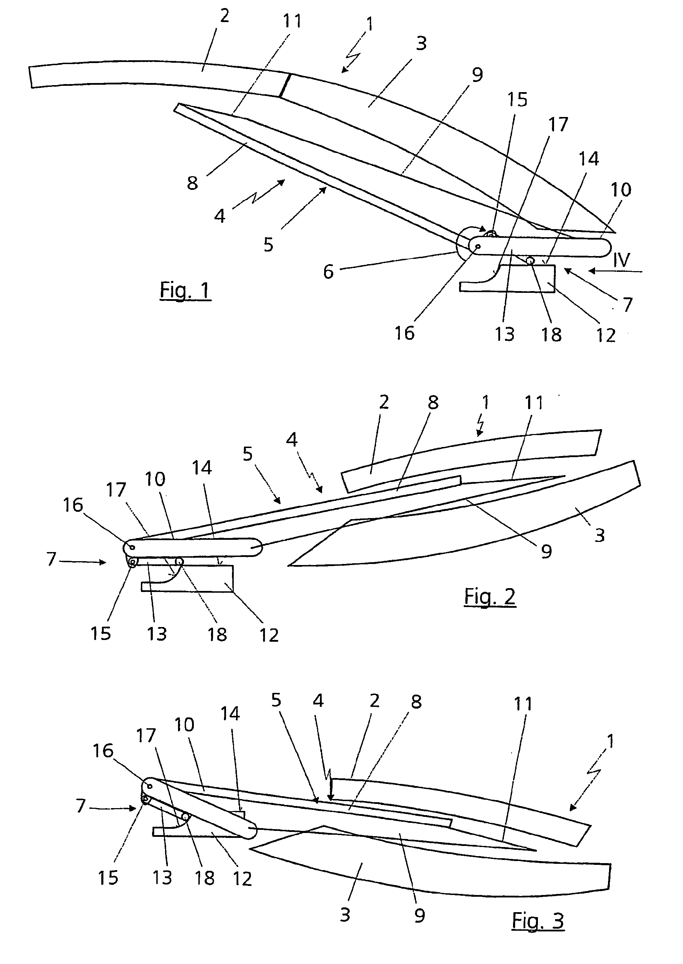

Fig. 1 zeigt ein Hardtop-Verdeck 1 für ein in seiner Gesamtheit nicht dargestelltes Cabriolet-Fahrzeug. Das Hardtop-Verdeck 1 weist zwei Dachteile auf, nämlich ein vorderes Dachteil 2 und ein hinteres Dachteil 3. Bei der Darstellung gemäß Fig. 1 befinden sich die beiden Dachteile 2 und 3 in ihrer geschlossenen Stellung, in der sie ein Dach für das Cabriolet-Fahrzeug bilden. Wie nachfolgend beschrieben und beispielsweise aus der DE 199 60 010 C2 bekannt, kann das Hardtop-Verdeck 1 mittels einer entsprechenden Ablegebewegung in eine abgelegte Stellung gebracht werden, in der es sich in einem nicht dargestellten Kofferraum des Cabriolet-Fahrzeugs befindet. Diese abgelegte Stellung des Hardtop-Verdecks 1 ist in Fig. 3 dargestellt. Dagegen zeigt Fig. 2 eine sogenannte Beladestellung, bei welcher das Hardtop-Verdeck 1 gegenüber der abgelegten Stellung angehoben ist, um einen besseren Zugang zu dem Kofferraum des Cabriolet-Fahrzeugs zu ermöglichen. Möchte also ein Fahrer oder Insasse des mit dem Hardtop-Verdeck 1 ausgestatteten Cabriolet-Fahrzeugs den Kofferraum beladen, so kann er, wie nachfolgend detailliert beschrieben, das Hardtop-Verdeck 1 aus seiner abgelegten Stellung in die Beladestellung bringen, den Kofferraum mit beliebigen Gegenständen beladen und anschließend das Hardtop-Verdeck 1 wieder von der Beladestellung in die abgelegte Stellung zurückführen.

Zur Bewegung des Hardtop-Verdecks 1 zwischen den in den Figuren 1 bis 3 dargestellten Stellungen dient eine Verdeckkinematik 4, die ein Verdeckgestänge 5, eine lediglich mittels eines Pfeils angedeutete und später detaillierter beschriebene Antriebseinrichtung 6 und eine Lagereinrichtung 7 aufweist. In an sich bekannter Weise ist das Verdeckgestänge 5 im vorliegenden Fall als Viergelenk ausgebildet und besteht aus einem Hauptlenker 8, einem C-Säulen-Lenker 9, einem Zwischenlager 10 und einem den Hauptlenker 8 mit dem C-Säulen-Lenker 9 verbindenden, gegenüber diesen beiden Lenkern drehbaren oberen Verbindungslenker 11. Der Hauptlenker 8 und der C-Säulen-Lenker 9 sind jeweils mit dem Zwischenlager 10 gelenkig verbunden und somit bezüglich ihrer Bewegung an denselben gebunden. In ebenfalls an sich bekannter, in den Figuren 1 bis 3 jedoch nicht erkennbarer Weise ist das vordere Dachteil 2 an dem oberen Verbindungslenker 11 und das hintere Dachteil 3 an dem C-Säulen-Lenker 9 angebracht. Die Lagereinrichtung 7 weist neben dem einen Teil des Viergelenks bildenden Zwischenlager 10 ein Hauptlager 12 auf, welches an einer nicht dargestellten Karosserie des Cabriolet-Fahrzeugs angebracht ist. Um einen sicheren Betrieb des Hardtop-Verdecks 1 zu gewährleisten und für eine gleichmäßige Kräfteverteilung über dasselbe zu sorgen, sind in an sich bekannter, aus Gründen der Übersichtlichkeit jedoch nicht dargestellter Weise jeweils zwei auf beiden Seiten des Hardtop-Verdecks 1 angeordnete Verdeckgestänge 5, Antriebseinrichtungen 6 und Lagereinrichtungen 7 vorgesehen.

An einem der Lenker des Verdeckgestänges 5, im vorliegenden Fall an dem Hauptlenker 8, ist ein Steuerhebel 13 gelenkig angebracht und zwischen dem Hauptlager 12 und dem Zwischenlager 10 auf einer dem Hauptlager 12 zugeordneten Steuerkontur 14 geführt. Der Steuerhebel 13 ist an einem Drehpunkt 15 gelenkig an dem Hauptlenker 8 angebracht. Der Drehpunkt 15 weist einen Abstand von einem Drehpunkt 16 auf, an dem der Hauptlenker 8 gelenkig an dem Zwischenlager 10 angebracht ist, sodass sich eine Hebelwirkung für den Steuerhebel 13 ergibt. In einem ersten Abschnitt, auf den sich der Steuerhebel 13 in der in Fig. 1 dargestellten Position befindet, verläuft die Steuerkontur 14 im Wesentlichen gerade, so dass das Zwischenlager 10 stets parallel zu dem Hauptlager 12 geführt ist und sich nicht gegenüber demselben bewegen kann. Dadurch wird, wie aus einem Vergleich der Figuren 1 und 2 hervorgeht, sichergestellt, dass bei der Ablegebewegung des Hardtop-Verdecks 1 lediglich die beiden über das Verdeckgestänge 5 an dem Zwischenlager 10 angebrachten Dachteile 2 und 3 in der üblichen und beispielsweise in der DE 199 60 010 C2 beschriebenen Art und Weise in den Kofferraum bewegt werden.

Sobald das Hardtop-Verdeck 1 jedoch die in Fig. 2 dargestellte Beladestellung erreicht, gelangt der Steuerhebel 13 an einen Punkt auf der Steuerkontur 14, in dem der gerade Abschnitt in einen Rücksprung 17 übergeht, der bewirkt, dass der Steuerhebel 13 bei der weiteren Bewegung des Hardtop-Verdecks 1 nach unten absinkt und somit ein Absenken des Zwischenlagers 10 gegenüber dem Hauptlager 12 ermöglicht. Dieser abgesenkte Zustand des Zwischenlagers 10, der der vollständig abgelegten Position der Dachteile 2 und 3 entspricht, ist in Fig. 3 dargestellt. Statt dem Hauptlager 12 könnte die Steuerkontur 14 gegebenenfalls auch dem Zwischenlager 10 zugeordnet sein, wobei diese dann ebenfalls so ausgeführt sein müsste, dass sie eine Bewegung des Zwischenlagers 10 gegenüber dem Hauptlager 12 erst nach dem Erreichen der Beladestellung ermöglicht. Dies wäre auch bei der Anbringung der Steuerkontur 14 an dem Zwischenlager 10 durch einen entsprechenden Rücksprung möglich.

Die Schließbewegung des Hardtop-Verdecks 1, also das Überführen desselben von der im Kofferraum abgelegten Stellung in die Geschlossenstellung, erfolgt in umgekehrter Weise wie die Öffnungsbewegung, also von Fig. 3 über Fig. 2 zu Fig. 1. In der Praxis erfolgt das Einnehmen der Beladestellung aus der in Fig. 3 dargestellten abgelegten Stellung nach Wunsch des Benutzers, wozu die Antriebseinrichtung 6 entsprechend angesteuert wird.

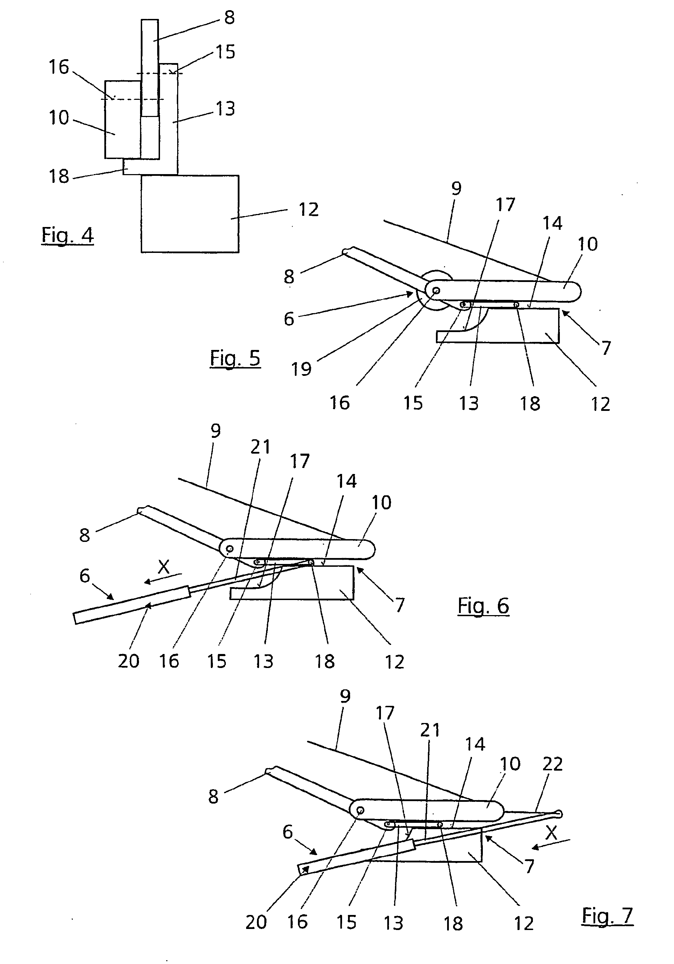

In Fig. 4 ist auf sehr schematische Art und Weise mittels einer Ansicht von hinten dargestellt, wie die Zuordnung des Steuerhebels 13 zwischen dem Zwischenlager 10 und dem Hauptlager 12 sowie dessen Anbringung an dem Hauptlenker 8 ausgestaltet sein kann. So weist der Steuerhebel 13 einen zwischen dem Hauptlager 12 und dem Zwischenlager 10 angeordneten Steuerbolzen 18 auf, der sich auf der Steuerkontur 14 des Hauptlagers 12 bewegt und für die Führung des Zwischenlagers 10 gegenüber dem Hauptlager 12 sorgt. Statt des Steuerbolzens 18 könnte der Steuerhebel 13 auch eine Rolle oder ein ähnliches, geeignetes Bauteil aufweisen.

Die Figuren 5, 6 und 7 zeigen verschiedene Möglichkeiten zur Ausführung der Antriebseinrichtung 6 zum Antrieb des Hardtop-Verdecks 1. Bei der in Fig. 5 dargestellten Ausführungsform weist die Antriebseinrichtung 6 beiderseitige, jeweils an einem der Lenker des Verdeckgestänges 5, im vorliegenden Fall an dem Hauptlenker 8, angreifende Drehantriebe 19 auf, von denen lediglich einer in äußerst schematischer Weise dargestellt ist. Der Drehantrieb 19 kann direkt an dem Hauptlenker 8 angreifen oder über ein Zahnrad oder eine ähnliche geeignete Einrichtung. Durch die von dem Drehantrieb 19 hervorgerufene Drehbewegung wird auch der Steuerhebel 13 zwischen dem Zwischenlager 10 und dem Hauptlager 12 bewegt, da er, wie oben beschrieben, an dem Hauptlenker 8 angebracht ist.

Bei der Ausführungsform der Antriebseinrichtung 6, die in Fig. 6 dargestellt ist, ist eine pneumatische oder hydraulische Zylinder-Kolben-Einheit 20 vorgesehen, die an dem dem Drehpunkt 15 gegenüberliegenden Ende des Steuerhebels 13 angreift und auf diese Weise ebenfalls den Hauptlenker 8 antreibt. Um das Hardtop-Verdeck 1 von der in Fig. 6 dargestellten Geschlossenstellung in die Belade- oder die abgelegte Stellung zu bringen, wird eine an dem Steuerhebel 13 angebrachte Kolbenstange 21 der Zylinder-Kolben-Einheit 20 in Richtung des Pfeils "X" eingefahren.

Auch bei der Ausführungsform der Antriebseinrichtung 6 gemäß Fig. 7 ist die Zylinder-Kolben-Einheit 20 vorgesehen, deren Kolbenstange 21 allerdings an einem Fortsatz 22 des C-Säulen-Lenkers 9 angreift. Bei dieser Ausführungsform wird also nicht der Hauptlenker 8 angetrieben, der jedoch über den oberen Verbindungslenker 11 selbstverständlich ebenfalls an der Ablegebewegung des Hardtop-Verdecks. 1 teilnimmt. Über den Hauptlenker 8 wird auch hierbei der zwischen dem Hauptlager 12 und dem Zwischenlager 10 geführte Steuerhebel 13 angetrieben.

Sämtliche Bewegungen des Hardtop-Verdecks 1 können durch eine nicht dargestellte Steuerungseinrichtung gesteuert und gegebenenfalls vom Innenraum des Cabriolet-Fahrzeugs veranlasst werden.

## Patentansprüche

1. Hardtop-Verdeck für ein Cabriolet-Fahrzeug mit wenigstens zwei zwischen einer geschlossenen Stellung und einer abgelegten Stellung verstellbaren Dachteilen, wobei die Dachteile in der abgelegten Stellung in einem Kofferraum des Cabriolet-Fahrzeugs abgelegt und in eine gegenüber der abgelegten Stellung angehobene Beladestellung bringbar sind, und mit einer Verdeckkinematik (4), welche wenigstens ein Verdeckgestänge (5), wenigstens eine Antriebseinrichtung (6) und wenigstens eine Lagereinrichtungraufweist, wobei die Dachteile über wenigstens einen Lenker des Verdeckgestänges an der Lagereinrichtung (7) angelenkt und mittels der Antriebseinrichtung (6) verstellbar sind, und wobei die Lagereinrichtung (7) ein Hauptlager (12) und ein gegenüber dem Hauptlager bewegliches Zwischenlager (10) aufweist, **dadurch gekennzeichnet, dass** an einem Lenker des Verdeckgestänges (5) ein Steuerhebel (13) gelenkig angebracht ist, wobei der Steuerhebel (13) zwischen dem Hauptlager (12) und dem Zwischenlager (10) angeordnet und auf einer Steuerkontur (14) geführt ist, welche derart ausgebildet ist, dass eine Bewegung des Zwischenlagers (10) gegenüber dem Hauptlager (12) bei der Ablegebewegung des Verdecks (1) erst nach dem Erreichen der Beladestellung möglich ist.

2. Hardtop-Verdeck nach Anspruch 1, **dadurch gekennzeichnet, dass** die Steuerkontur (14) einen Rücksprung (17) aufweist, der ein Absenken des Zwischenlagers (10) gegenüber dem Hauptlager (12) ermöglicht.

3. Hardtop-Verdeck nach Anspruch 1 oder 2, **dadurch gekennzeichnet, dass** die Steuerkontur (14) dem Hauptlager (12) zugeordnet ist.

4. Hardtop-Verdeck nach Anspruch 1, 2 oder 3, **dadurch gekennzeichnet, dass** der Steuerhebel (13) einen zwischen dem Hauptlager (12) und dem Zwischenlager (10) angeordneten Steuerbolzen (18) aufweist.

5. Hardtop-Verdeck nach einem der Ansprüche 1 bis 4, **dadurch gekennzeichnet, dass** der Steuerhebel (13) an einem Drehpunkt (15) gelenkig an einem Hauptlenker (8) des Verdeckgestänges (5) angebracht ist.

6. Hardtop-Verdeck nach einem der Ansprüche 1 bis 5, **dadurch gekennzeichnet, dass** die Antriebseinrichtung (6) beiderseitige, jeweils an einem der Lenker des Verdeckgestänges (5) angreifende Drehantriebe (19) aufweist.

7. Hardtop-Verdeck nach einem der Ansprüche 1 bis 5, **dadurch gekennzeichnet, dass** die Antriebseinrichtung (6) beiderseitige, jeweils an dem Steuerhebel (13) oder an einem der Lenker des Verdeckgestänges (5) angreifende Zylinder-Kolben-Einheiten (20) aufweist.

8. Hardtop-Verdeck nach einem der Ansprüche 1 bis 7, **dadurch gekennzeichnet, dass** das Verdeckgestänge (5) als Viergelenk ausgebildet ist, welches aus dem Hauptlenker (8), einem C-Säulen-Lenker (9), dem Zwischenlager (10) und einem oberen Verbindungslenker (11) besteht.

9. Hardtop-Verdeck nach einem der Ansprüche 1 bis 8, **dadurch gekennzeichnet, dass** jeweils zwei auf beiden Seiten des Hardtop-Verdecks (1) angeordnete Verdeckgestänge (5), Antriebseinrichtungen (6) und Lagereinrichtungen (7) vorgesehen sind.

10. Cabriolet-Fahrzeug mit einem Hardtop-Verdeck nach einem der Ansprüche 1 bis 9.

## Claims

1. Hardtop for a convertible, comprising at least two roof parts adjustable between a closed position and a stowed position, wherein the roof parts are stowed in a boot of the convertible in the stowed position and can be brought into a loading position which is raised relative to the stowed position, and further comprising a convertible top kinematics system (4) having at least one hardtop linkage (5), at least one drive device (6) and at least one bearing device (7), wherein the roof parts are hinged to the bearing device (7) via at least one link of the hardtop linkage and adjustable by means of the drive device (6), and wherein the bearing device (7) comprises a main bearing (12) and an intermediate bearing (10) which is movable relative to the main bearing, **characterised in that** a control lever (13) is pivotably mounted on a link of the hardtop linkage (5), the control lever (13) being located between the main bearing (12) and the intermediate bearing (10) and guided on a control contour (14) which is designed such that a movement of the intermediate bearing (10) relative to the main bearing (12) in the stowage movement of the top (1) is possible only once the loading position has been reached.

2. Hardtop according to claim 1, **characterised in that** the control contour (14) comprises a recess (17) which allows a lowering of the intermediate bearing (10) relative to the main bearing (12).

3. Hardtop according to claim 1 or 2, **characterised in that** the control contour (14) is assigned to the main bearing (12).

4. Hardtop according to claim 1, 2 or 3, **characterised in that** the control lever (13) comprises a control pin (18) located between the main bearing (12) and the intermediate bearing (10).

5. Hardtop according to any of claims 1 to 4, **characterised in that** the control lever (13) is pivotably mounted at a fulcrum (15) on a main link (8) of the hardtop linkage (5).

6. Hardtop according to any of claims 1 to 5, **characterised in that** the drive device (6) comprises rotary drives (10) on both sides, each of which acts on one of the links of the hardtop linkage (5).

7. Hardtop according to any of claims 1 to 5, **characterised in that** the drive device (6) comprises cylinder-and-piston units (20) on both sides, each of which acts on the control lever (13) or on one of the links of the hardtop linkage (5).

8. Hardtop according to any of claims 1 to 7, **characterised in that** the hardtop linkage (5) is designed as a four-link consisting of the main link (8), a C-post link (9), the intermediate bearing (10) and an upper connecting link (11).

9. Hardtop according to any of claims 1 to 8, **characterised in that** two hardtop linkages (5), drive devices (6) and bearing devices (7) each are provided, one on each side of the hardtop (1).

10. Convertible having a hardtop according to any of claims 1 to 9.

## Revendications

1. Toit amovible pour un véhicule cabriolet comportant au moins deux parties de toit pouvant être déplacées entre une position déployée et une position rabattue, les parties de toit dans la position rabattue étant rangées dans un coffre de véhicule cabriolet et pouvant être amenés dans une position de chargement relevée par rapport à la position rabattue, et une cinématique de capot (4) laquelle présente au moins une tringlerie de capote (5), au moins un dispositif d'entraînement (6) et au moins un dispositif de support (7), les parties du toit étant reliées de façon articulée au dispositif de support (7) au moins par une bielle de la tringlerie de capote et pouvant être déplacées au moyen du dispositif d'entraînement (6), et le dispositif de support (7) présentant un support principal (12) et un support intermédiaire (10) pouvant se déplacer par rapport au support principal (10), **caractérisé en ce qu'**un levier de commande (13) est monté de façon articulée sur la bielle de la tringlerie de capote (5), le levier de commande (13) étant disposé entre le support principal (12) et le support intermédiaire (10) et étant guidé sur un profil de commande (14) lequel est conçu de telle manière qu'un mouvement du support intermédiaire (10) par rapport au support principal (12) n'ait possible qu'après avoir atteint la position de chargement, lors du mouvement de retrait de la capote (1).

2. Toit amovible selon la revendication 1, **caractérisé en ce que** le profil de commande (14) présente un retrait (17) qui permet un abaissement du support intermédiaire (10) par rapport au support principal (12).

3. Toit amovible selon la revendication 1 ou la revendication 2, **caractérisé en ce que** le profil de commande (14) est associé au support principal (12).

4. Toit amovible selon la revendication 1 ou la revendication 2 ou 3, **caractérisé en ce que** le levier de commande (13) présente un axe de commande (18) entre le support principal (12) et le support intermédiaire (10).

5. Toit amovible selon la revendication 1 à 4, **caractérisé en ce que** le levier de commande (13) est monté de façon articulée sur un point de rotation (15) sur une bielle principale (8) de la tringlerie de capote (5).

6. Toit amovible selon la revendication 1 à 5, **caractérisé en ce que** le dispositif d'entraînement (6) présente de chaque côté des entraînements rotatifs (19) intégrés à chaque fois dans la bielle de la tringlerie de capote (5).

7. Toit amovible selon la revendication 1 à 5, **caractérisé en ce que** le dispositif d'entraînement (6) présente de chaque côté des unités piston-cylindre (20) intégrées dans le levier de commande (13) ou dans l'une des bielles de la tringlerie de capote (5).

8. Toit amovible selon l'une quelconque des revendications 1 à 7, **caractérisé en ce que** la tringlerie de capote (5) est conçue comme un système à quatre joints articulés, qui est composé de la bielle (8) principale, d'une bielle (9) à colonne en C, du palier intermédiaire (10) et une bielle de liaison supérieure (11).

9. Toit amovible selon l'une quelconque des revendications 1 à 8, **caractérisé en ce qu'**il est prévu à chaque fois deux tringleries de capote (5), dispositifs d'entraînement (6) et dispositif de support (7) disposées de chaque côté du toit amovible (1).

10. Véhicule cabriolet avec un toit amovible selon l'une quelconque des revendications 1 à 9.
